# EUROPÄISCHE PATENTSCHRIFT

(11) **EP 3 953 608 B1**
(45) Veröffentlichungstag und Bekanntmachung des Hinweises auf die Patenterteilung: **16.04.2025**
(21) Anmeldenummer: 20707082.2
(22) Anmeldetag: 25.02.2020
(51) Int. Cl.: F16G 1/10, F16G 1/28

(54) **ZAHNRIEMEN MIT PROFILSEITIGER GEWEBELAGE**
TOOTHED BELT HAVING PROFILE-SIDE FABRIC PLY
COURROIE DENTÉE COMPORTANT UNE COUCHE DE TISSU CÔTÉ PROFIL

(30) Priorität: 08.04.2019 DE 102019205005
(43) Veröffentlichungstag der Anmeldung: 16.02.2022
(73) Patentinhaber: ContiTech Deutschland GmbH, 30175 Hannover (DE)
(72) Erfinder: BROCKE, Stephan, 30419 Hannover (DE); KUCHARCZYK, Andre, 30419 Hannover (DE); GÖSER, Hubert, 30419 Hannover (DE)
(74) Vertreter: Continental Corporation
(86) Internationale Anmeldenummer: PCT/EP2020/054846
(87) Internationale Veröffentlichungsnummer: WO 2020/207654

(56) Entgegenhaltungen:
- DE-A1- 102007 061 735

## Beschreibung

Die Erfindung betrifft einen Zahnriemen mit mindestens einer mit einem Zahnprofil versehenen Antriebsseite, wobei das Zahnprofil mit einer Gewebelage versehen ist und die Gewebelage mindestens auf ihrer dem Zahnprofil abgewandten Außenseite eine Beschichtung aus Kunststoff aufweist. Weiterhin betrifft die Erfindung ein Verfahren zur Herstellung eines solchen Zahnriemens.

Die hier angesprochenen Zahnriemen, wie z.B. aus der DE 10 2007 061735 A1 bekannt, üblicherweise Polyurethan-Zahnriemen, werden so hergestellt, dass das Grundmaterial extrudiert wird. Während der Extrusion laufen in einer speziellen zugehörigen Austrittsdüse Festigkeitsträger bzw. Zugträger, die in aller Regel als Corde ausgebildet sind, in das extrudierte, noch warme und relativ zähflüssige Material ein. Diese Corde nehmen im fertigen ausgehärteten Zahnriemen im Wesentlichen die Zugkräfte auf.

Das so entstandene noch zähflüssige Polyurethanmaterial als Grundmaterial des Zahnriemens wird mit den Zugträgern zwischen einem Band und einem mit einer Außenverzahnung versehenen Formrad unter Wärmeentzug zum fertigen Zahnriemen eingeformt, wobei das Band das Formrad über einen Umschlingungswinkel von ca. 200° unter Druck umschlingt. Bei den hier angesprochenen gattungsgemäßen Zahnriemen läuft auf der verzahnten Seite des Zahnriemens kurz vor Eintritt des Rohlings in den Umschlingungsbogen des Formrades eine Gewebelage auf das Formrad auf, die mindestens auf ihrer dem Zahnprofil abgewandten Außenseite eine Beschichtung aus Kunststoff aufweist. Dieses beschichtete Gewebe, auch Gewebearmierung genannt, wird dann zusammen mit dem Rohling in die formgebend verzahnte Außenkontur des Formrades eingedrückt. Solche mit Gewebearmierung versehene Zahnriemen sind bekannt und vorteilhaft z.B. im Hinblick auf Verschleißreduzierung und Geräuschminderung bei Zahnriementrieben.

Auch bei Windkraftanlagen sind solcherart hergestellte Riemen zum Beispiel zur Verstellung der Rotorblätter im Einsatz und sind dadurch stark korrosiven Umgebungsbedingungen ausgesetzt, insbesondere durch Salzwasser bei Windkraftanlagen im Offshore-Einsatz. Solche Riemen mit einer zahnseitigen Gewebearmierung mit Beschichtung weisen ein verbessertes Kämmen mit den zugehörigen Zahnscheiben auf, d.h. ein gutes Einzahnverhalten und stellen einen Schutz und eine Abdeckung für die Zugträger bereit.

Bei der beschriebenen und bekannten Herstellung kann es trotz größter Sorgfalt vorkommen, dass während der Formung auf dem Formrad eine nicht völlig gleichmäßige Penetration des Grundmaterials in alle Bereiche des Gewebes stattfindet. Bei nicht vollständiger Penetration des Gewebes während des Herstellungsprozesses, etwa bei Verwendung hochviskoser PUR-Schmelzen für das Grundmaterial des Riemens, können in der Flanke der Gewebearmierung, also in den Randbereichen des späteren Zahnriemens, Bereiche entstehen, in denen das Gewebe nicht vollständig penetriert und deshalb offenporig ist. Es kann dann die Gefahr bestehen, dass durch Gasaustausch und/oder Kapillarwirkung während des späteren Einsatzes des Riemens Feuchtigkeit über diese Randbereiche eindringt. Diese kann sich in der Folge über die gesamte Riemenbreite ziehen und würde dann an den Kontaktstellen mit dem Zugträger evtl. zu einer beschleunigten Korrosion und damit zur Verringerung der Laufzeit des Riemens führen.

Um solche Unwägbarkeiten zu vermeiden, bestand für die Erfindung die Aufgabe, einen Zahnriemen und ein Verfahren zu seiner Herstellung bereitzustellen, bei denen eine unerwünschte Korrosionsbelastung durch in die Riemenkanten eindringende Feuchtigkeit vermieden wird, ein einwandfreies Einzahnverhalten weiterhin möglich ist und eine lange Lebensdauer des Riemens auch beim Einsatz in korrosiver Umgebung erreicht wird.

Gelöst wird diese Aufgabe durch die Merkmale des Hauptanspruchs und des nebengeordneten Verfahrensanspruchs. Weitere vorteilhafte Ausbildungen sind in den jeweiligen Unteransprüchen offenbart.

Dabei ist mindestens in den seitlichen Randbereichen der Gewebelage eine bis an ihre seitlichen Kanten und die den Zahnriemen begrenzenden Seitenflächen reichende und die Gewebelage durchdringende Versiegelung der Gewebelage vorgesehen. Eventuell vorhandenen Poren an der Kante des Gewebes oder von Grundmaterial oder Beschichtung nicht durchdrungene und benetzte Bereiche sind nun durch die vorher aufgebrachte Versiegelung, beispielsweise durch aufgetragenen Versiegelungslack gegen Eindringen von Medien und Kapillarwirkung versiegelt. Damit wird eine lange Lebensdauer des Riemens auch beim Einsatz in korrosiver Umgebung erreicht.

Eine besonders vorteilhafte Ausbildung des Zahnriemens ergibt sich dadurch, dass für den Zahnriemen eine Gewebelage eingesetzt wird, die nur auf ihrer dem Zahnprofil abgewandten Außenseite eine Beschichtung aus Kunststoff aufweist, nämlich eine sogenannte "dublierte Folien-Gewebe-Armierung". Damit wird die Gewebelage von ihrer dem Zahnprofil zugewandten Seite aus mindestens teilweise, im mittleren Bereich des Zahnriemens auf jedenfalls nahezu vollständig vom Grundmaterial des Zahnriemens durchdrungen. Dadurch vereinfacht sich die geschilderte Herstellungsart und gestaltet sich überaus prozesssicher.

Eine weitere vorteilhafte Ausbildung besteht darin, dass die Gewebelage auf ihrer dem Zahnprofil zugewandten Seite ebenfalls mindestens eine Beschichtung aus Kunststoff aufweist. Die auf dieser Seite befindliche Beschichtung aus Kunststoff kann dann insgesamt so ausgebildet sein, dass sie sich mit dem Grundmaterial des Zahnriemens problemlos verbindet.

Die Erfindung besteht des Weiteren darin, dass die Versiegelung ein die Gewebelage durchdringendes Material aufweist, vorzugsweise ein mit dem Grundmaterial des Zahnriemens und/oder den Kunststoffschichten verbindbares Material. Die Versiegelung in den Randbereichen der Gewebelage ist dann mit den benachbarten Materialien problemlos verbindbar und verhindert sicher ein Eindringen von Feuchtigkeit.

Die Erfindung besteht des Weiteren darin, dass die Versiegelung ein Kunststoffmaterial aufweist, vorzugsweise als Kunststofflack ausgebildet ist. Ein solches Kunststoffmaterial, insbesondere ein Kunststofflack, gestaltet die Herstellung des Zahnriemens besonders einfach. Gleiche Vorteile ergeben sich dann, wenn die Versiegelung einen Schmelzkleber auf der Basis von Ethylenvinylacetat (EVA) oder von Polyamid (PA) aufweist oder als ein solcher Schmelzkleber ausgebildet ist.

Eine weitere vorteilhafte Ausbildung besteht darin, dass das Grundmaterial des Zahnriemens im Wesentlichen aus Polyurethan besteht und die Versiegelung aus einer in ihrer Viskosität entsprechend eingestellten Polyurethanschmelze oder einem polyurethanbasierten Lack. Durch eine solche Einstellung der Viskosität der Polyurethanschmelze und/oder des Lacks lässt sich ein eine Verschiebung oder eine Verzerrung der Gewebestruktur sicher vermeiden und die ursprüngliche Dehnfähigkeit des Gewebes und die geforderte Zahntragfähigkeit erhalten.

Zur Herstellung dient vorteilhafterweise das erfindungsgemäße Verfahren, bei dem
a) das Grundmaterial des Zahnriemens zunächst extrudiert wird,
b) während der Extrusion der zugehörigen Austrittsdüse des Extruders Festigkeitsträger bzw. Zugträger in das extrudierte Material einlaufen,
c) der so entstandene Rohling mit Zugträgern zwischen einem auf seinem Außenumfang mit dem Negativ der Verzahnung versehenen Formrad und einem das Formrad umlaufenden Band unter Wärmeentzug zum fertigen Zahnriemen eingeformt wird, wobei das Band das Formrad über einen Umschlingungswinkel von ca. 200° unter Druck umschlingt,
d) kurz vor Eintritt des Rohlings in den Umschlingungsbogen des Formrades eine Gewebelage auf das Formrad aufläuft, welche dann zusammen mit dem Rohling in die formgebend verzahnte Außenkontur des Formrades eingedrückt wird, wobei
   i) die Gewebelage mindestens auf ihrer dem Formrad zugewandten Seite vor dem Einlaufen auf das Formrad mit einer Beschichtung aus Kunststoff sowie in ihren seitlichen Randbereichen mit einer bis an ihre seitlichen Kanten und die den Zahnriemen begrenzenden Seitenflächen reichende und die Gewebelage durchdringende Versiegelung versehen wurde,
   ii) die beschichtete und versiegelte Gewebelage außerdem so vorgeformt wurde, dass sie bereits vor Einlaufen auf das Formrad im Wesentlichen die Geometrie der Zahnform des Formrades aufweist,
wonach die mit der Zahnform vorgeformte Gewebelage kämmend auf das Formrad aufläuft und zusammen mit dem Rohling in die formgebend verzahnte Außenkontur des Formrades soweit in den Rohling eingedrückt wird, dass die Gewebelage und die Versiegelung mit dem Polyurethan-Grundmaterial des Zahnriemens durchdrungen bzw. verbunden werden.

Die vorgeformte Gewebelage läuft damit kämmend und synchron auf das Formrad auf und wird zusammen mit dem Rohling in die verzahnte Außenkontur des Formrades eingedrückt. Dabei wird dann also nur noch das Grundmaterial verformt und es muss nicht mehr die Gewebelage als solche durch den im Grundmaterial entstehenden Druck noch in die Zähne des Formrades eingedrückt werden. Damit lässt sich beispielsweise die Eindringtiefe des Grundmaterials in die Gewebelage viel präziser einstellen als bei den herkömmlichen Verfahren.

Eine vorteilhafte Ausbildung des Verfahrens besteht darin, dass die Versiegelung der Gewebelage mit einem mit dem Polyurethan-Grundmaterial des Zahnriemens verbindbarem Kunststoffmaterial durch Lackieren, Sprühen oder Tauchen erfolgt. Diese Arten der Aufbringung sind besonders einfach in den Herstellungsprozess bzw. die vorbereitenden Arbeiten zu integrieren.

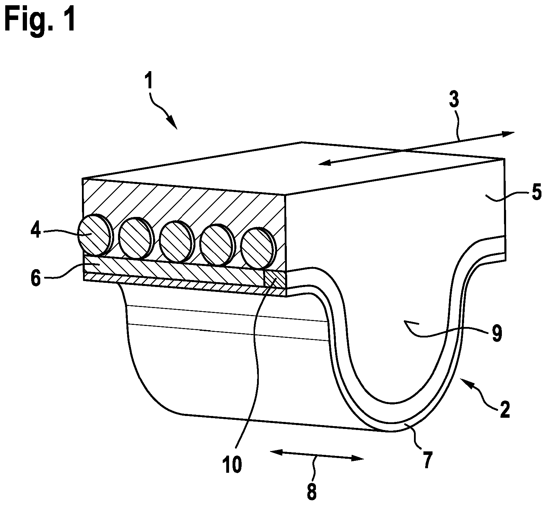

Anhand eines Ausführungsbeispiels soll die Erfindung näher erläutert werden. Die einzige Figur zeigt den Seitenbereich eines Abschnitts eines erfindungsgemäßen Zahnriemens 1, dessen Antriebsseite mit einem Zahnprofil 2 versehenen ist. Der hier gezeigte Abschnitt des Zahnprofils 2 enthält gerade nur einen Zahn, um im Detail die erfindungsgemäße Ausbildung des Zahnriemens zu verdeutlichen. Der Zahnriemen 1 ist mit Zugträgern oder Corden 4 versehen, die in Längsrichtung 3 des Zahnriemens angeordnet und innerhalb des Grundmaterials 5 eingebunden sind.

Das Zahnprofil 2 des Zahnriemens ist mit einer Gewebelage 6 versehen, wobei die Gewebelage hier auf ihrer dem Zahnprofil 2 abgewandten Außenseite eine Beschichtung 7 aus Kunststoff aufweist.

Im hier sichtbaren seitlichen Randbereich 8 der Gewebelage 6 ist eine bis an die seitlichen Kanten der Gewebelage und die den Zahnriemen begrenzenden Seitenflächen 9 reichende und die Gewebelage durchdringende Versiegelung 10 aus einem polyurethanbasiertem Lack vorgesehen.

Die Gewebelage 6 ist auf und von ihrer dem Zahnprofil zugewandten Seite mehr oder weniger vollständig vom Grundmaterial des Zahnriemens durchdrungen.

### Bezugszeichenliste

### (Teil der Beschreibung)

- 1: Zahnriemen
- 2: Zahnprofil
- 3: Längsrichtung
- 4: Zugträger / Cord
- 5: Grundmaterial des Zahnriemens
- 6: Gewebelage
- 7: Kunststoffbeschichtung der Gewebelage
- 8: Randbereich der Gewebelage
- 9: Seitenfläche des Zahnriemens
- 10: Versiegelung

## Patentansprüche

1. Zahnriemen (1) mit mindestens einer mit einem Zahnprofil (2) versehenen Antriebsseite, wobei das Zahnprofil mit einer Gewebelage (6) versehen ist und die Gewebelage mindestens auf ihrer dem Zahnprofil (2) abgewandten Außenseite eine Beschichtung (7) aus Kunststoff aufweist, wobei mindestens in den seitlichen Randbereichen (8) der Gewebelage eine bis an ihre seitlichen Kanten und die den Zahnriemen begrenzenden Seitenflächen (9) reichende und die Gewebelage (6) durchdringende Versiegelung (10) der Gewebelage vorgesehen ist, **dadurch gekennzeichnet, dass** die Versiegelung (10) einen Schmelzkleber auf der Basis von Ethylenvinylacetat (EVA) oder von Polyamid (PA) aufweist oder **dadurch gekennzeichnet, dass** das Grundmaterial (5) des Zahnriemens (1) im Wesentlichen aus Polyurethan besteht und die Versiegelung (10) aus einer Polyurethanschmelze oder einem polyurethanbasierten Lack.

2. Zahnriemen nach Anspruch 1, bei dem die Gewebelage (6) von ihrer dem Zahnprofil zugewandten Seite ausgehend mindestens teilweise von Grundmaterial (5) des Zahnriemens (1) durchdrungen ist.

3. Zahnriemen nach Anspruch 1, bei dem die Gewebelage auf ihrer dem Zahnprofil (2) zugewandten Seite ebenfalls mindestens eine Beschichtung aus Kunststoff aufweist.

4. Zahnriemen nach einem der Ansprüche 1 bis 3, bei dem die Versiegelung (10) ein die Gewebelage (36) durchdringendes Material aufweist, vorzugsweise ein mit dem Grundmaterial (5) des Zahnriemens (1) und/oder den Kunststoffschichten verbindbares Material.

5. Zahnriemen nach einem der Ansprüche 1 bis 4, bei dem die Versiegelung (10) ein Kunststoffmaterial aufweist, vorzugsweise als Kunststofflack ausgebildet ist.

6. Verfahren zur Herstellung eines Zahnriemens aus thermoplastischem Polyurethan nach Anspruch 1 bis 5, bei dem
a) das Grundmaterial des Zahnriemens zunächst extrudiert wird,
b) während der Extrusion der zugehörigen Austrittsdüse des Extruders Festigkeitsträger bzw. Zugträger in das extrudierte Material einlaufen,
c) der so entstandene Rohling mit Zugträgern zwischen einem auf seinem Außenumfang mit dem Negativ der Verzahnung versehenen Formrad und einem das Formrad umlaufenden Band unter Wärmeentzug zum fertigen Zahnriemen eingeformt wird, wobei das Band das Formrad über einen Umschlingungswinkel von ca. 200° unter Druck umschlingt,
d) kurz vor Eintritt des Rohlings in den Umschlingungsbogen des Formrades eine Gewebelage auf das Formrad aufläuft, welche dann zusammen mit dem Rohling in die formgebend verzahnte Außenkontur des Formrades eingedrückt wird, wobei
i) die Gewebelage mindestens auf ihrer dem Formrad zugewandten Seite vor dem Einlaufen auf das Formrad mit einer Beschichtung aus Kunststoff sowie in ihren seitlichen Randbereichen mit einer bis an ihre seitlichen Kanten und die den Zahnriemen begrenzenden Seitenflächen reichende und die Gewebelage durchdringende Versiegelung versehen wurde,
ii) die beschichtete und versiegelte Gewebelage außerdem so vorgeformt wurde, dass sie bereits vor Einlaufen auf das Formrad im Wesentlichen die Geometrie der Zahnform des Formrades aufweist,
e) **dadurch gekennzeichnet, dass** wonach die mit der Zahnform vorgeformte Gewebelage kämmend auf das Formrad aufläuft und zusammen mit dem Rohling in die formgebend verzahnte Außenkontur des Formrades soweit in den Rohling eingedrückt wird, dass die Gewebelage (6) und die Versiegelung mit dem Polyurethan-Grundmaterial (5) des Zahnriemens (1) durchdrungen bzw. damit verbunden werden.

7. Verfahren nach Anspruch 6, bei dem die Versiegelung der Gewebelage mit einem mit dem Polyurethan-Grundmaterial (5) des Zahnriemens (1) verbindbarem Kunststoffmaterial durch Lackieren, Sprühen oder Tauchen erfolgt.

## Claims

1. Toothed belt (1) having at least one drive side provided with a toothed profile (2), wherein the toothed profile is provided with a fabric layer (6) and at least on its outside facing away from the toothed profile (2) the fabric layer has a coating (7) made of plastics material, wherein at least in the lateral edge regions (8) of the fabric layer a sealing (10) of the fabric layer which extends to the lateral edges thereof and the lateral surfaces (9) delimiting the toothed belt and which penetrates the fabric layer (6) is provided, **characterized in that** the sealing (10) comprises a hotmelt adhesive based on ethylene vinyl acetate (EVA) or on polyamide (PA) or **characterized in that** the main material (5) of the toothed belt (1) is substantially composed of polyurethane and the sealing (10) is composed of a polyurethane melt or a polyurethane-based lacquer.

2. Toothed belt according to Claim 1, wherein starting from its side facing the toothed profile the fabric layer (6) is at least partially penetrated by the main material (5) of the toothed belt (1).

3. Toothed belt according to Claim 1, wherein on its side facing the toothed profile (2) the fabric layer likewise has at least one coating made of plastics material.

4. Toothed belt according to any of Claims 1 to 3, wherein the sealing (10) comprises a material penetrating the fabric layer (36), preferably a material joinable to the main material (5) of the toothed belt (1) and/or the plastics material layers.

5. Toothed belt according to any of Claims 1 to 4, wherein the sealing (10) comprises a plastics material, preferably in the form of a plastics material lacquer.

6. Process for producing a toothed belt made of thermoplastic polyurethane according to Claims 1 to 5, wherein
a) the main material of the toothed belt is initially extruded,
b) during the extrusion from the corresponding outlet die of the extruder strength members or tensile members are introduced into the extruded material,
c) the resulting precursor comprising tensile members is formed between a forming wheel provided with the negative of the tooth pattern on its outer circumference and a belt running around the forming wheel with removal of heat to afford the finished toothed belt, wherein the belt wraps around the forming wheel under pressure at a wrap angle of about 200°,
d) shortly before entry of the precursor into the wrapping arc of the forming wheel a fabric layer is introduced onto the forming wheel and is then together with the precursor pressed into the shapingly toothed outer contour of the forming wheel, wherein
i) before being fed onto the forming wheel, at least on its side facing the forming wheel, the fabric layer was provided with a coating made of plastics material and in its lateral edge regions with a sealing which extends to the lateral edges thereof and the lateral surfaces delimiting the toothed belt and which penetrates the fabric layer,
ii) the coated and sealed fabric layer was also preformed such that it already substantially has the geometry of the tooth shape of the forming wheel before it is fed onto the forming wheel,
e) **characterized in that** the fabric layer preformed with the tooth shape is then meshingly fed onto the forming wheel and is then together with the precursor pressed into the precursor in the shapingly toothed outer contour of the forming wheel to such an extent that the fabric layer (6) and the sealing are penetrated by and joined with the polyurethane main material (5) of the toothed belt (1).

7. Process according to Claim 6, wherein the sealing of the fabric layer with a plastics material bondable to the polyurethane main material (5) of the toothed belt (1) is carried out by lacquering, spraying or immersing.

## Revendications

1. Courroie dentée (1) avec au moins un côté d'entraînement pourvu d'un profil denté (2), le profil denté étant pourvu d'une couche de tissu (6) et la couche de tissu présentant au moins sur son côté extérieur détourné du profil denté (2) un revêtement (7) en matière plastique, un scellement (10) de la couche de tissu s'étendant jusqu'à ses bords latéraux et aux surfaces latérales (9) délimitant la courroie dentée et pénétrant dans la couche de tissu (6) étant prévu au moins dans les zones marginales latérales (8) de la couche de tissu, **caractérisée en ce que** le scellement (10) présente une colle thermofusible à base d'éthylène-acétate de vinyle (EVA) ou de polyamide (PA) ou **caractérisée en ce que** le matériau de base (5) de la courroie dentée (1) est essentiellement constitué de polyuréthane et le scellement (10) d'une masse fondue de polyuréthane ou d'un vernis à base de polyuréthane.

2. Courroie dentée selon la revendication 1, dans laquelle la couche de tissu (6) est au moins partiellement pénétrée par le matériau de base (5) de la courroie dentée (1) à partir de son côté tourné vers le profil denté.

3. Courroie dentée selon la revendication 1, dans laquelle la couche de tissu présente également au moins un revêtement en matière plastique sur son côté tourné vers le profil denté (2).

4. Courroie dentée selon l'une quelconque des revendications 1 à 3, dans laquelle le scellement (10) présente un matériau pénétrant dans la couche de tissu (36), de préférence un matériau pouvant être relié au matériau de base (5) de la courroie dentée (1) et/ou aux couches de matière plastique.

5. Courroie dentée selon l'une quelconque des revendications 1 à 4, dans laquelle le scellement (10) présente un matériau plastique, de préférence est réalisé sous forme de vernis plastique.

6. Procédé de fabrication d'une courroie dentée en polyuréthane thermoplastique selon les revendications 1 à 5, dans lequel
a) le matériau de base de la courroie dentée est d'abord extrudé,
b) pendant l'extrusion de la filière de sortie associée de l'extrudeuse, des supports de résistance ou des supports de traction entrent dans le matériau extrudé,
c) l'ébauche ainsi obtenue avec des supports de traction est mise en forme entre une roue de formage pourvue sur sa périphérie extérieure du négatif de la denture et une bande entourant la roue de formage avec extraction de chaleur pour former la courroie dentée finie, la bande entourant la roue de formage sur un angle d'enroulement d'environ 200° sous pression,
d) peu avant l'entrée de l'ébauche dans l'arc d'enroulement de la roue de formage, une couche de tissu arrive sur la roue de formage, qui est ensuite enfoncée conjointement avec l'ébauche dans le contour extérieur denté de mise en forme de la roue de formage,
i) la couche de tissu ayant été pourvue, au moins sur son côté tourné vers la roue de formage, avant l'entrée sur la roue de formage, d'un revêtement en matière plastique ainsi que, dans ses zones marginales latérales, d'un scellement s'étendant jusqu'à ses bords latéraux et aux surfaces latérales délimitant la courroie dentée et pénétrant dans la couche de tissu,
ii) la couche de tissu revêtue et scellée ayant en outre été préformée de telle sorte qu'elle présente déjà essentiellement la géométrie de la forme dentée de la roue de formage avant d'entrer sur la roue de formage,
e) **caractérisé en ce qu'**ensuite la couche de tissu préformée avec la forme dentée arrive sur la roue de formage en s'engrenant et est enfoncée conjointement avec l'ébauche dans le contour extérieur denté de mise en forme de la roue de formage dans l'ébauche jusqu'à ce que la couche de tissu (6) et le scellement soient pénétrés par le matériau de base en polyuréthane (5) de la courroie dentée (1) ou soient reliés à celui-ci.

7. Procédé selon la revendication 6, dans lequel le scellement de la couche de tissu avec une matière plastique pouvant être reliée au matériau de base en polyuréthane (5) de la courroie dentée (1) est effectué par vernissage, pulvérisation ou trempage.
